# EUROPÄISCHE PATENTANMELDUNG

(11) **EP 2 495 145 A1**
(43) Veröffentlichungstag der Anmeldung: **05.09.2012**
(21) Anmeldenummer: 12157688.8
(22) Anmeldetag: 01.03.2012
(51) Int. Cl.: B60T 17/22, B60W 10/184

(54) **Fahrzeug, insbesondere Flurförderzeug**

(30) Priorität: 02.03.2011 DE 102011004995
(71) Anmelder: Jungheinrich Aktiengesellschaft, 22047 Hamburg (DE)
(72) Erfinder: Bauer, Wolfgang, 85368 Moosburg (DE); Jakubik, Peter, 84036 Landshut (DE); Kuba, Bernhard, 85406 Zolling (DE)
(74) Vertreter: Tiesmeyer, Johannes

(57) **Zusammenfassung**

Die Erfindung betrifft ein Fahrzeug, insbesondere Flurförderzeug, mit einer Antriebsmaschine (2) für den Traktionsantrieb, einer Bremsanlage (6) und einer Fahrbetriebszustandskontrolleinrichtung, die eine elektronische Steuereinrichtung (20) und wenigstens einen auf Traktionsbewegung des Fahrzeugs ansprechenden und Fahrbewegungsinformationen an die elektronische Steuereinrichtung abgebenden Fahrbewegungssensor (24, 26) aufweist, wobei die Fahrbetriebskontrolleinrichtung dazu eingerichtet ist, bei Inbetriebnahme des Fahrzeugs eine Bremsfunktionsüberprüfung durchzuführen, indem sie bei zum Bremsen des Fahrzeugs aktivierter Bremsanlage (6) die Antriebsmaschine (2) zu einer Traktionsbewegung des Fahrzeugs während eines Testzeitintervalls aktiviert und Fahrbewegungsinformationen des Fahrbewegungssensors (24, 26) mittels der elektronischen Steuereinrichtung (20) erfasst und auswertet, um zu entscheiden, ob eine unzulässige Fahrbewegung trotz aktivierter Bremsanlage stattfindet, wobei die Fahrbetriebskontrolleinrichtung ferner dazu eingerichtet ist, eine Fehlerreaktion auszulösen, vorzugsweise den Fahrbetrieb des Fahrzeugs zu unterbinden, falls die Bremsfunktionsüberprüfung eine unzulässige Fahrbewegung des Fahrzeugs in dem Testzeitintervall ergibt.

## Beschreibung

Die Erfindung betrifft ein Fahrzeug, insbesondere Flurförderzeug, mit einer Antriebsmaschine für den Traktionsantrieb, einer Bremsanlage und einer Fahrbetriebszustandskontrolleinrichtung, die eine elektronische Steuereinrichtung und wenigstens einen auf Traktionsbewegung des Fahrzeugs ansprechenden und Fahrbewegungsinformationen an die elektronische Steuereinrichtung abgebenden Fahrbewegungssensor aufweist.

Bevorzugt findet die vorliegende Erfindung bei elektrisch angetriebenen Flurförderzeugen, insbesondere bei sogenannten Elektrogabelstaplern Anwendung.

Es ist grundsätzlich Aufgabe und Pflicht der Bedienungsperson eines solchen Fahrzeugs, dessen Betriebssicherheit und insbesondere die Funktion der Bremsen in nicht zu großen Zeitabständen zu überprüfen, wobei die Bremsüberprüfung bei jeder Inbetriebnahme des Fahrzeugs erfolgen sollte. Falls eine solche Bremsfunktionsüberprüfung vergessen wird oder aus Nachlässigkeit unterbleibt, besteht die Gefahr, dass eine Fahrt mit defekten oder verschlissenen Bremsen angetreten wird. Dabei wird jedoch die Sicherheit der Bedienungsperson des Fahrzeugs und etwaiger sich in der Umgebung des Fahrzeugs befindlicher Personen erheblich gefährdet.

Aufgabe der vorliegenden Erfindung ist es, die Betriebssicherheit eines Fahrzeugs der eingangs genannten Art zu vergrößern.

Zur Lösung dieser Aufgabe wird erfindungsgemäß vorgeschlagen, dass bei einem Fahrzeug mit den eingangs genannten Merkmalen die Fahrbetriebskontrolleinrichtung dazu eingerichtet ist, bei Inbetriebnahme des Fahrzeugs eine Bremsfunktionsüberprüfung durchzuführen, indem sie bei zum Bremsen des Fahrzeugs aktivierter Bremsanlage die Antriebsmaschine zu einer Traktionsbewegung des Fahrzeugs während eines Testzeitintervalls aktiviert und Fahrbewegungsinformationen des Fahrbewegungssensors mittels der elektronischen Steuereinrichtung erfasst und auswertet, um zu entscheiden, ob eine unzulässige Fahrbewegung trotz aktivierter Bremsanlage stattfindet, wobei die Fahrbetriebskontrolleinrichtung ferner dazu eingerichtet ist, eine Fehlerreaktion auszulösen, vorzugsweise den Fahrbetrieb des Fahrzeugs zu unterbinden, falls die Bremsfunktionsüberprüfung eine unzulässige Fahrbewegung des Fahrzeugs in dem Testzeitintervall ergibt.

Die Bremsfunktionsüberprüfung wird vorzugsweise automatisch innerhalb einer Selbsttestphase unmittelbar nach Einschalten des Fahrzeugs durchgeführt. Es kann jedoch auch vorgesehen sein, dass eine Bremsfunktionsüberprüfung vor Abgabe eines erstmaligen Fahrbetriebsbefehls nach dem jeweiligen Einschalten des Fahrzeugs erfolgt.

Falls die Steuereinrichtung eine unzulässige Fahrbewegung des Fahrzeugs während des Testzeitintervalls der Bremsfunktionsüberprüfung feststellt, wird dies dahingehend interpretiert, dass die Bremsanlage nicht korrekt funktioniert. Die dann von der Fahrbetriebskontrolleinrichtung ausgelöste Fehlerreaktion kann ein optischer oder/und akustischer Alarm sein. Vorzugsweise wird jedoch ein Anfahren des Fahrzeugs von der Fahrbetriebskontrolleinrichtung unterbunden. Dies kann z. B. dadurch erfolgen, dass die Fahrbetriebskontrolleinrichtung das Fahrzeug insgesamt wieder ausschaltet. Ein auf die defekte Bremsanlage hinweisender Warnhinweis kann z. B. auf einem Display des Fahrzeugs optisch angezeigt oder/und akustisch über einen Lautsprecher oder dgl. abgegeben werden.

Vorzugsweise handelt es sich bei dem Fahrzeug um ein Elektroflurförderzeug, bei dem die Antriebsmaschine ein Elektromotor ist, wobei die Fahrbetriebskontrolleinrichtung dazu eingerichtet ist, dem Elektromotor während des Testzeitintervalls wenigstens einen definierten elektrischen Antriebsimpuls zuzuführen. Das Testzeitintervall sollte extrem kurz bemessen sein, so dass sich das Fahrzeug bei der Bremsfunktionsüberprüfung auch dann nicht signifikant in Bewegung setzen kann, falls die Bremse nicht funktioniert.

Die Bremsanlage kann eine Feststellbremse, z. B. in Form einer selbsteinrückenden Federspeicherbremse, sowie auch eine aktiv zu betätigende Betriebsbremse umfassen, wobei die Funktionsüberprüfung durch die Fahrbetriebskontrolleinrichtung vorzugsweise eine Funktionsüberprüfung der Feststellbremsfunktion und eine Funktionsüberprüfung der Betriebsbremsfunktion umfasst.

Bei dem Fahrbewegungssensor handelt es sich vorzugsweise um einen Drehzahlsensor oder/und um einen Drehwinkelsensor im Antriebsstrang des Fahrzeugs, welcher schon bei vergleichsweise kleinen Drehwinkeln anspricht.

Bei der Bremsfunktionsüberprüfung sollte die Fahrbetriebskontrolleinrichtung auch die Bremsbetätigungszustände überwachen und berücksichtigen, z. B. durch Überwachung der Betätigung eines Bremspedals des Fahrzeugs oder von Bremsbetätigungssignalen elektrischer, optischer, pneumatischer oder hydraulischer Art, je nach Ausgestaltung der Bremsanlage. So kann das Fahrzeug z. B. auch eine Fahrbetriebskontrolleinrichtung umfassen, die dazu eingerichtet ist, die Bremsanlage bei der Bremsfunktionsüberprüfung in verschiedenen Bremsbestätigungsstufen zu aktivieren, um genauere Informationen über den Zustand der Bremsanlage zu erhalten.

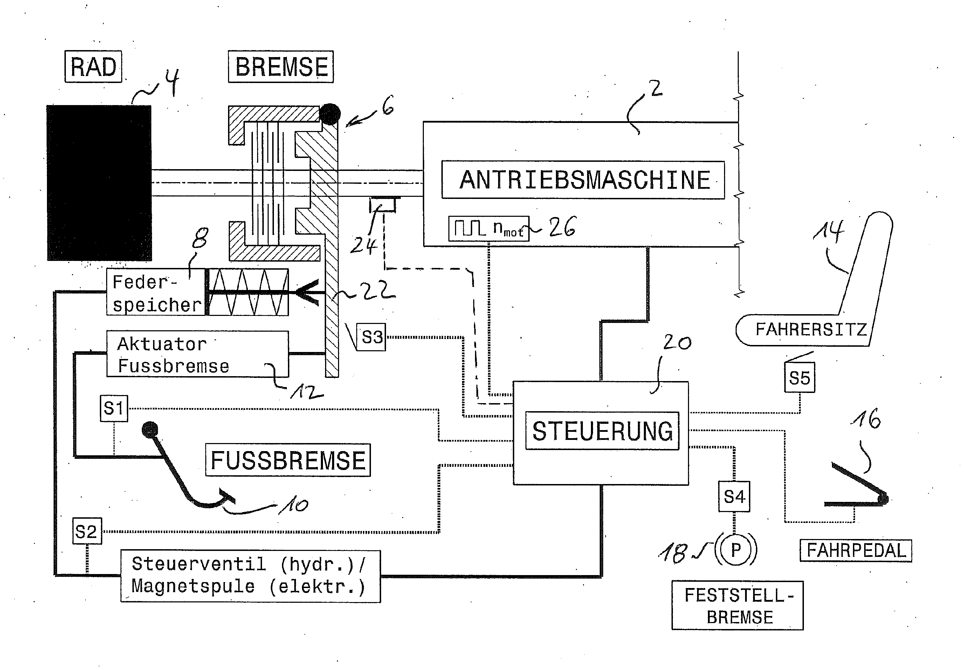

Die Erfindung wird unter Bezugnahme auf die beiliegende Figur nachstehend erläutert.

Die Figur zeigt in einer schematischen und teils als Blockdiagramm angefertigten Darstellung Komponenten eines Elektrogabelstaplers nach der Erfindung. Der Elektrogabelstapler hat als Antriebsmaschine für den Traktionsantrieb einen Elektromotor 2, welcher Antriebsräder 4 antreibt, von denen in der Figur nur eines dargestellt ist. Eine Bremsanlage 6 dient zum Abbremsen des Fahrzeugs und ermöglicht sowohl eine Betriebsbremsfunktion aus der Fahrt heraus als auch eine Feststellbremsfunktion. Im Beispielsfall umfassen die Bremsen der Bremsanlage 6 einen Federspeicher 8, der die Bremse mechanisch unter Federkraft einrücken lässt, wenn der Elektrogabelstapler ausgeschaltet wird. Der Federspeicher kann nach Einschalten des Elektrogabelstaplers elektrisch oder hydraulisch (je nach Ausgestaltung) beaufschlagt werden, um die Bremse zu lösen, so dass der Elektrogabelstapler dann fahrbereit ist. Zum Auslösen der Betriebsbremsfunktion ist ein Bremspedal 10 und ein Aktuator 12 vorgesehen, der bei Betätigung des Bremspedals 10 die Bremsanlage aktiviert, um den Stapler zu bremsen. Der Bedienungsperson des Staplers steht ein Fahrersitz 14 zur Verfügung, von dem aus sie ein Fahrpedal 16 zur Fahrzeugbeschleunigung und das Bremspedal 10 mit den Füßen erreichen kann. Auch kann sie vom Fahrersitz 14 aus ein Betätigungselement 18 der Feststellbremse erreichen.

Die Fahrbetriebskontrolleinrichtung des Staplers umfasst eine elektronische Steuereinrichtung 20, an der verschiedene Sensoren angeschlossen sind und die dazu eingereichtet ist, den Betrieb der Antriebsmaschine 2 in Abhängigkeit von Fahrbefehlen der Bedienungsperson und ggf. weitere Parameter zu steuern. Im Beispielsfall erfolgt die Inbetriebnahme des Fahrzeugs durch Betätigen eines Startknopfes oder/und Betätigen eines Startschlosses mit einem Startschlüssel, so dass die Steuereinrichtung 20 mit elektrischer Energie versorgt wird und ihren Betrieb aufnehmen kann. Zunächst erfolgt eine Selbsttestphase, in dem diverse Betriebsfunktionen des Fahrzeugs überprüft werden, wobei erfindungsgemäß auch eine Bremsfunktionsüberprüfung dazu gehört. Dabei kann die Steuerung mittels der Sensoren S1, S2, S3 und S4 den jeweiligen Bremsbetätigungszustand der Bremsanlage 6 erfassen, nämlich ob das Bremspedal 10 betätigt ist oder die Federspeicher 8 beaufschlagt sind, um die Bremse freizugeben, oder das Betätigungselement 18 der Feststellbremse aktiviert ist oder eine Druckplatte 22 der Bremse im Bremsbetätigungszustand ist.

Bei der Bremsfunktionsüberprüfung kann die Steuereinrichtung 20 ein Aktivieren der Bremse 6 veranlassen bzw. die Freigabe der Bremse durch den Federspeicher 8 zunächst unterbinden und während eines kurzen Testzeitintervalls wenigstens einen definierten kurzen elektrischen Antriebsimpuls dem Elektromotor 2 zuführen, um einen Drehzahl- bzw. Drehmomentsollwert vorzugeben.

Ein Sensor 24 am Antriebsstrang des Staplers überwacht, ob sich der Stapler trotz betätigter Bremse 6 während des Testzeitintervalls in Bewegung setzt, wobei der Sensor 24 seine Drehzahl- bzw. Drehwinkelinformationen an die Steuereinrichtung 20 abgibt. Stellt die Steuereinrichtung 20 aufgrund der Signale des Sensors 24 oder/und ggf. eines zusätzlichen Drehzahlsensors 26 fest, dass eine vorgegebene Grenzdrehzahl bzw. ein vorgegebenes Drehwinkelinkrement im Antriebsstrang überschritten wird, so wird die Bremsanlage 6 als fehlerhaft eingestuft und von der Steuereinrichtung 20 eine entsprechende Fehlerreaktion ausgelöst. Dies kann ein optischer oder/ und akustischer Warnhinweis sein. Vorzugsweise sollte die Fehlerreaktion das unverzügliche Unterbinden des Fahrbetriebs des Fahrzeugs umfassen, falls die Bremsfunktionsüberprüfung eine unzulässige Fahrbewegung des Staplers in dem Testzeitintervall ergibt. Das Unterbinden des Fahrbetriebs erfolgt im Beispielsfall dadurch, dass die Steuereinrichtung 20 der Antriebsmaschine 2 keine elektrischen Fahrimpulse bereitstellt.

Die Bremsfunktionsüberprüfung kann sich auf eine Bremsfunktion beschränken, etwa auf die zuverlässige Wirkung der Federspeicherbremse bei einer kombinierten Bremsanlage, wie sie in der Figur angedeutet ist. Vorzugsweise umfasst die Bremsfunktionsüberprüfung jedoch die Betriebsbremsfunktion und ggf. auch die Feststellbremsfunktion.

## Patentansprüche

1. Fahrzeug, insbesondere Flurförderzeug, mit
einer Antriebsmaschine (2) für den Traktionsantrieb,
einer Bremsanlage (6) und
einer Fahrbetriebszustandskontrolleinrichtung, die eine elektronische Steuereinrichtung (20) und wenigstens einen auf Traktionsbewegung des Fahrzeugs ansprechenden und Fahrbewegungsinformationen an die elektronische Steuereinrichtung abgebenden Fahrbewegungssensor (24, 26) aufweist,
**dadurch gekennzeichnet,**
**dass** die Fahrbetriebskontrolleinrichtung dazu eingerichtet ist, bei Inbetriebnahme des Fahrzeugs eine Bremsfunktionsüberprüfung durchzuführen, indem sie bei zum Bremsen des Fahrzeugs aktivierter Bremsanlage (6) die Antriebsmaschine (2) zu einer Traktionsbewegung des Fahrzeugs während eines Testzeitintervalls aktiviert und Fahrbewegungsinformationen des Fahrbewegungssensors (24, 26) mittels der elektronischen Steuereinrichtung (20) erfasst und auswertet, um zu entscheiden, ob eine unzulässige Fahrbewegung trotz aktivierter Bremsanlage stattfindet, wobei die Fahrbetriebskontrolleinrichtung ferner dazu eingerichtet ist, eine Fehlerreaktion auszulösen, vorzugsweise den Fahrbetrieb des Fahrzeugs zu unterbinden, falls die Bremsfunktionsüberprüfung eine unzulässige Fahrbewegung des Fahrzeugs in dem Testzeitintervall ergibt.

2. Fahrzeug nach Anspruch 1, **dadurch gekennzeichnet, dass** die Antriebsmaschine (2) wenigstens einen Elektromotor umfasst und dass die Fahrbetriebskontrolleinrichtung dazu eingerichtet ist, dem Elektromotor (2) während des Testzeitintervalls wenigstens einen definierten elektrischen Antriebsimpuls zuzuführen.

3. Fahrzeug nach Anspruch 1 oder 2, **dadurch gekennzeichnet, dass** die Fahrbetriebskontrolleinrichtung dazu eingerichtet ist, die Bremsanlage (6) zum Bremsen des Fahrzeugs bei der Bremsfunktionsüberprüfung zu aktivieren.

4. Fahrzeug nach Anspruch 3, **dadurch gekennzeichnet, dass** die Fahrbetriebskontrolleinrichtung dazu eingerichtet ist, die Bremsanlage (6) bei der Bremsfunktionsüberprüfung in verschiedenen Bremsbetätigungsstufen zu aktivieren.

5. Fahrzeug nach einem der vorhergehenden Ansprüche, **dadurch gekennzeichnet, dass** der Fahrbewegungssensor (24, 26) ein Drehzahlsensor oder/und Drehwinkelsensor ist.

6. Fahrzeug nach einem der vorhergehenden Ansprüche, **dadurch gekennzeichnet, dass** die Fahrbetriebskontrolleinrichtung wenigstens einen Sensor (S1, S2, S3, S4) zur Überwachung des Bremsbetätigungszustandes der Bremsanlage (6) aufweist und dazu eingerichtet ist, von dem Sensor zur Überwachung des Bremsbetätigungszustandes gelieferte Daten bei der Bremsfunktionsüberprüfung zu berücksichtigen.

7. Fahrzeug nach einem der vorhergehenden Ansprüche, **dadurch gekennzeichnet, dass** die Bremsanlage eine Feststellbremsfunktion und eine Betriebsbremsfunktion aufweist und dass die Bremsfunktionsüberprüfung eine Funktionsüberprüfung der Feststellbremsfunktion und eine Funktionsüberprüfung der Betriebsbremsfunktion umfasst.
